# EUROPEAN PATENT SPECIFICATION

(11) **EP 3 917 120 B1**
(45) Date of publication and mention of the grant of the patent: **27.08.2025**
(21) Application number: 20744621.2
(22) Date of filing: 17.01.2020
(51) Int. Cl.: H04M 1/72433, A63F 13/352, A63F 13/424, A63F 13/87, H04M 11/10, H04M 1/72427, G10L 13/00, G10L 15/22

(54) **VOICE CHAT DEVICE, VOICE CHAT METHOD, AND PROGRAM**
SPRACHCHATVORRICHTUNG, SPRACHCHATVERFAHREN UND PROGRAMM
DISPOSITIF DE CHAT VOCAL, PROCÉDÉ DE CHAT VOCAL, ET PROGRAMME

(30) Priority: 22.01.2019 JP 2019008400
(43) Date of publication of application: 01.12.2021
(73) Proprietor: Sony Interactive Entertainment Inc., Tokyo 108-0075 (JP)
(72) Inventor: SUZUKI, Shogo, Tokyo 108-0075 (JP); OIWA, Takuma, Tokyo 108-0075 (JP); MIYASHITA, Akira, Tokyo 108-0075 (JP); MATSUDA, Satoru, Tokyo 108-0075 (JP); SASAKI, Chiaki, Tokyo 108-0075 (JP)
(74) Representative: D Young & Co LLP
(86) International application number: PCT/JP2020/001483
(87) International publication number: WO 2020/153251

(56) References cited:
- WO-A1-2016/024572
- WO-A2-2012/174299
- JP-A- 2000 285 063
- JP-A- 2001 142 487
- JP-A- 2007 214 909
- JP-A- 2015 100 073
- US-A1- 2004 030 750
- US-A1- 2011 195 739
- US-A1- 2018 161 683
- US-A1- 2018 270 175

## Description

### [Technical Field]

The present invention relates to a voice chat apparatus, a voice chat method, and a program.

### [Background Art]

In recent years, a user has played a video game while having voice chat with other users at distant locations who are playing the video game together with the user or watching the moving image depicting the situation in the video game, for example.

Previously proposed arrangements are disclosed in US 2018/161683 A1 and US 2004/030750 A1.

### [Summary]

### [Technical Problem]

Some users want to grasp the content of voice chat as text that is obtained as a result of voice recognition on voice in the voice chat. It is desired that such users can get text obtained as a result of voice recognition on voice in voice chat.

However, there are users who do not need text obtained as a result of voice recognition on voice in voice chat such as users who do not want to grasp the text. Providing the text to such users only unnecessarily increases the data traffic.

The present invention has been made in view of the above-mentioned circumstances, and has an object to provide a voice chat apparatus, a voice chat method, and a program that achieve appropriate control on whether or not to provide text obtained as a result of voice recognition on voice in voice chat.

### [Solution to Problem]

This invention is defined by independent claims 1, 8 and 9. Further respective aspects and features of the disclosure are defined in the dependent claims.

### [Brief Description of Drawings]

[FIG. 1]

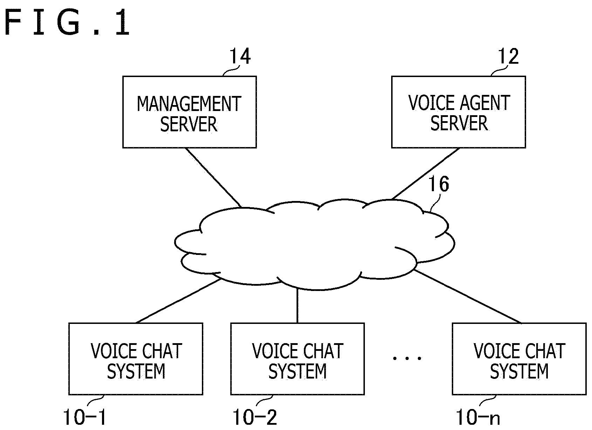

   FIG. 1 is a diagram illustrating an exemplary overall configuration of a computer network according to an embodiment of the present invention.
[FIG. 2A]

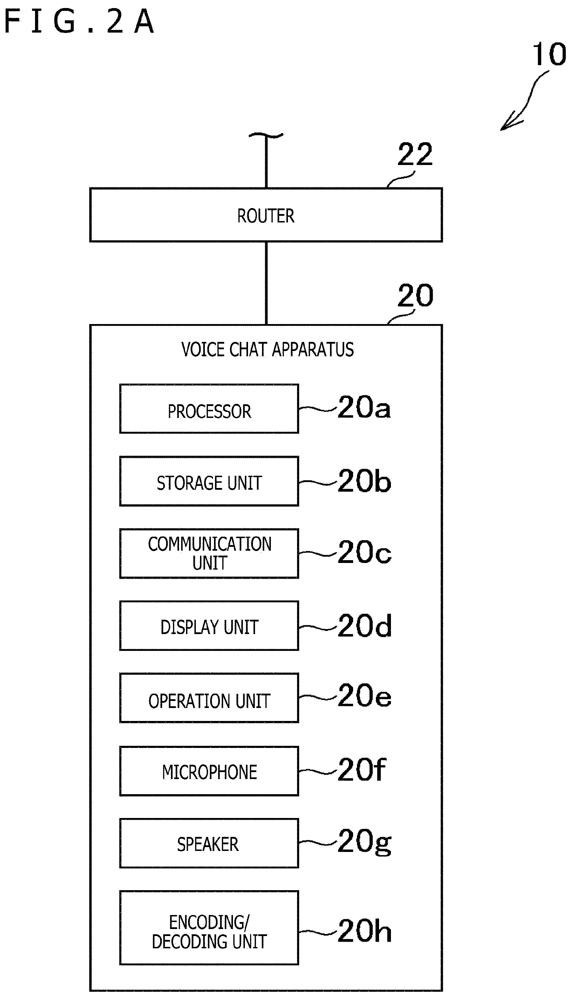

   FIG. 2A is a diagram illustrating an exemplary configuration of a voice chat system according to the embodiment of the present invention.
[FIG. 2B]

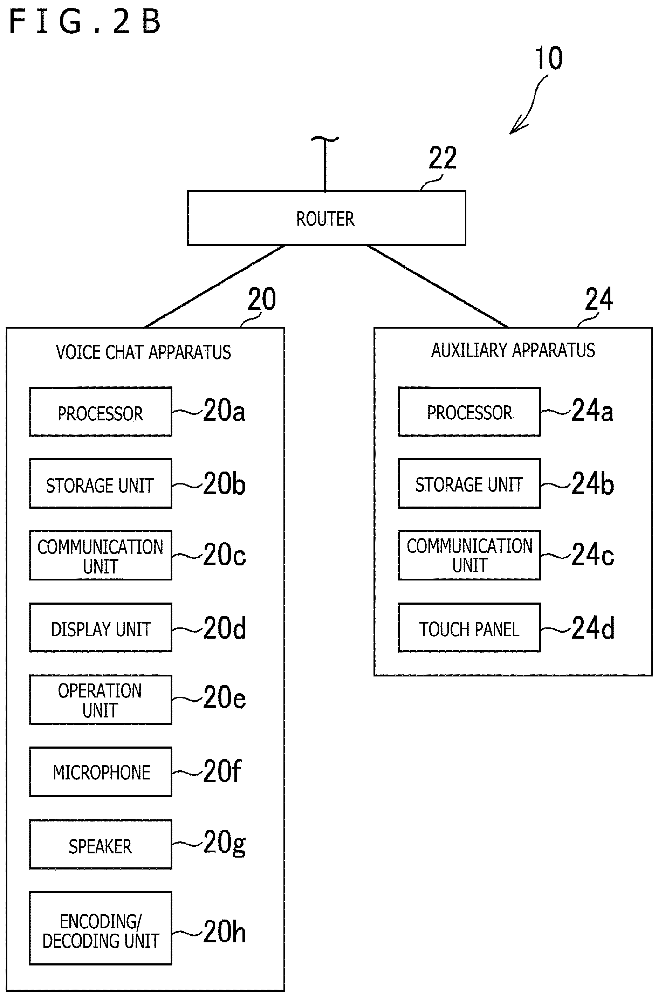

   FIG. 2B is a diagram illustrating an exemplary configuration of the voice chat system according to the embodiment of the present invention.
[FIG. 3]

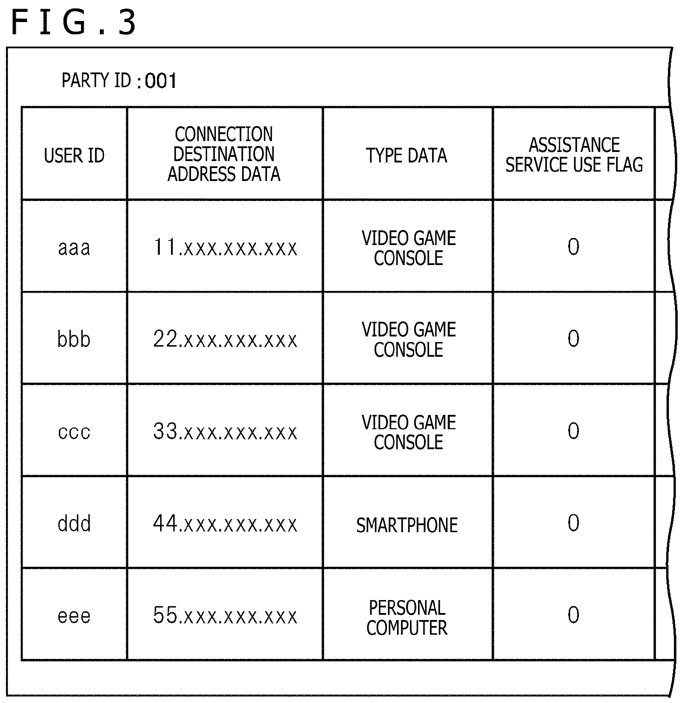

   FIG. 3 is a diagram illustrating exemplary party management data.
[FIG. 4]

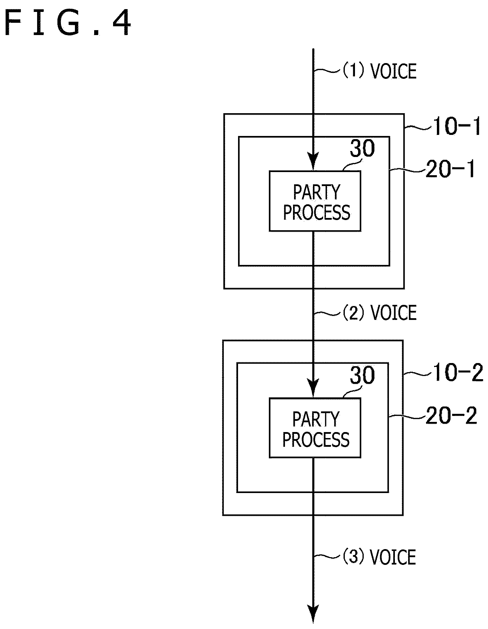

   FIG. 4 is a diagram illustrating exemplary processing that is executed when voice for voice chat is input.
[FIG. 5]

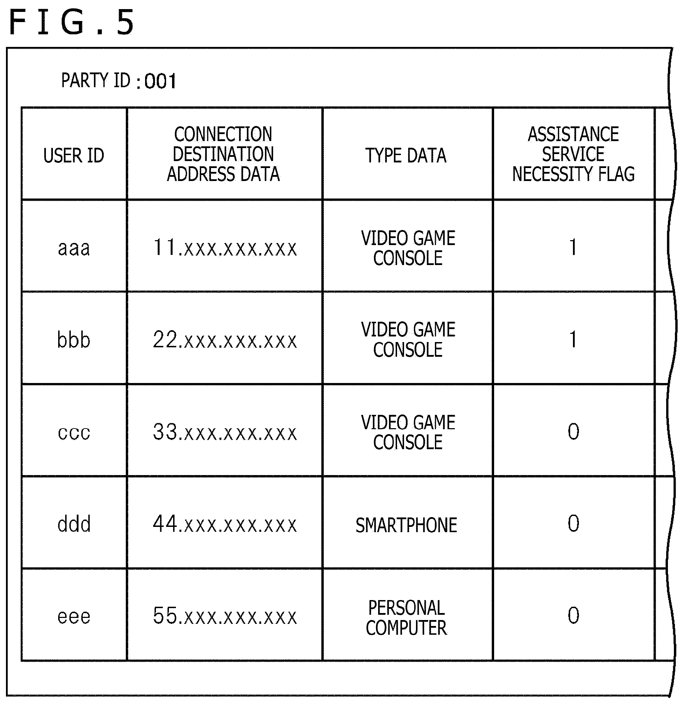

   FIG. 5 is a diagram illustrating exemplary party management data.
[FIG. 6]

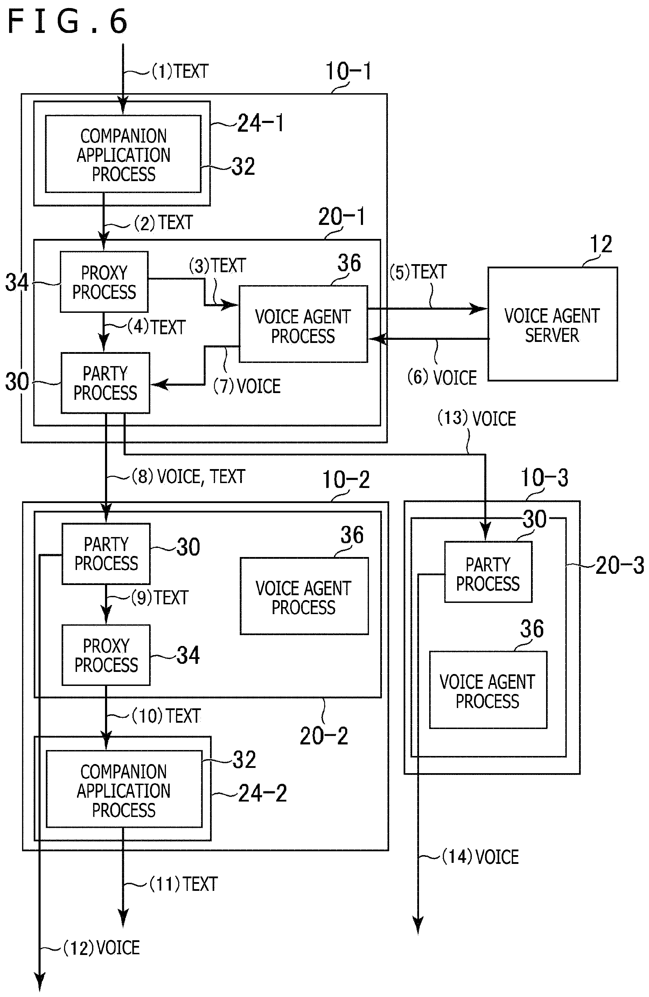

   FIG. 6 is a diagram illustrating exemplary processing that is executed when text to be converted into voice for voice chat is input.
[FIG. 7]

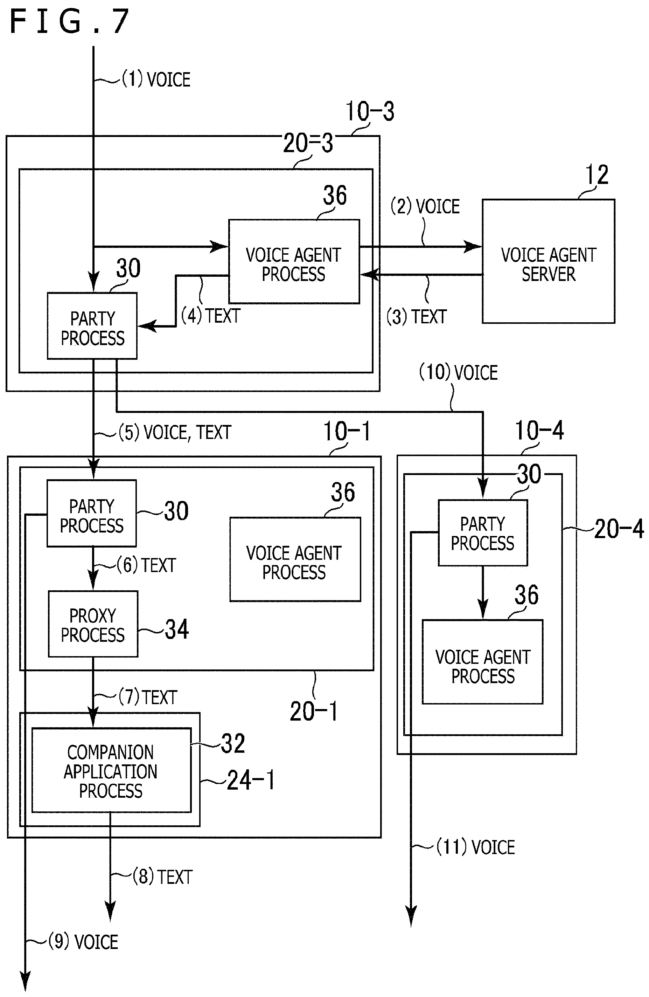

   FIG. 7 is a diagram illustrating exemplary processing that is executed when voice for voice chat is input.
[FIG. 8]
   Page 4 Follows.

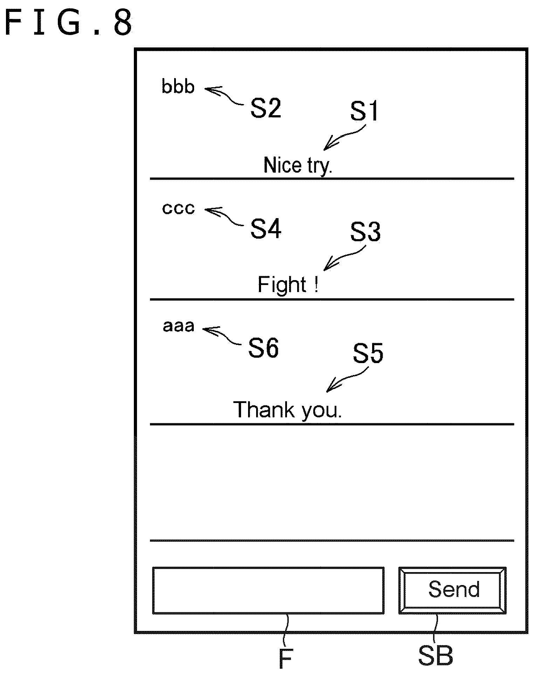

   FIG. 8 is a diagram illustrating an exemplary auxiliary screen.
[FIG. 9]

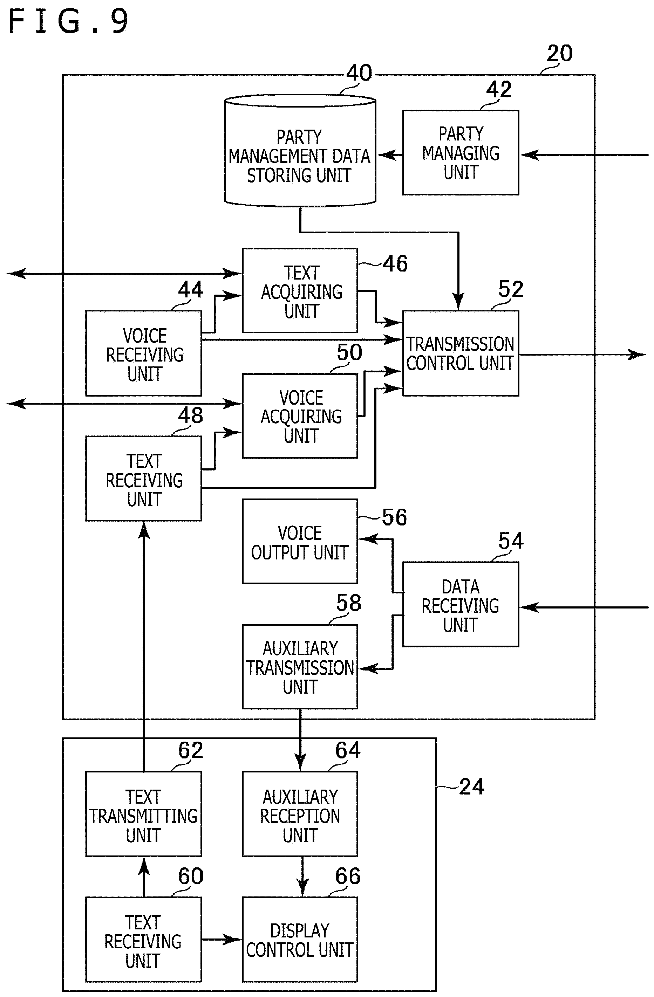

   FIG. 9 is a functional block diagram illustrating exemplary functions that are implemented in the voice chat system according to the embodiment of the present invention.
[FIG. 10]

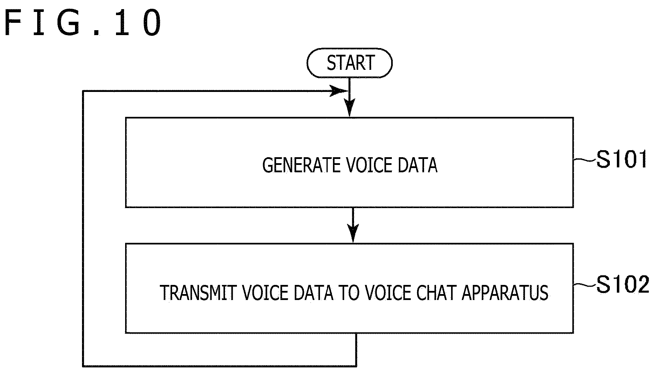

   FIG. 10 is a flow chart illustrating an exemplary flow of processing that is performed in a voice chat apparatus according to the embodiment of the present invention.
[FIG. 11]

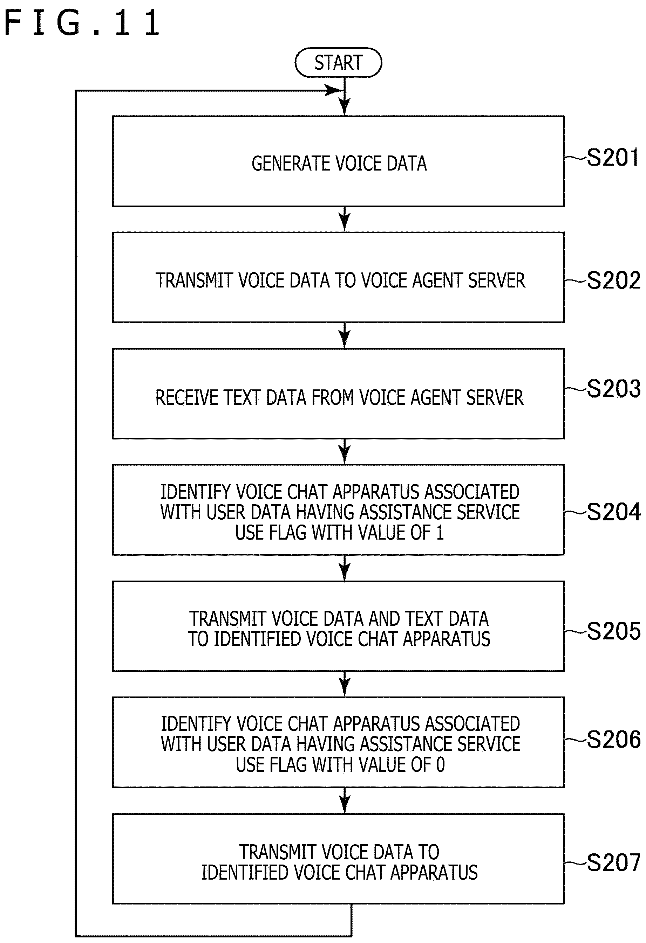

   FIG. 11 is a flow chart illustrating an exemplary flow of processing that is performed in the voice chat apparatus according to the embodiment of the present invention.
[FIG. 12]

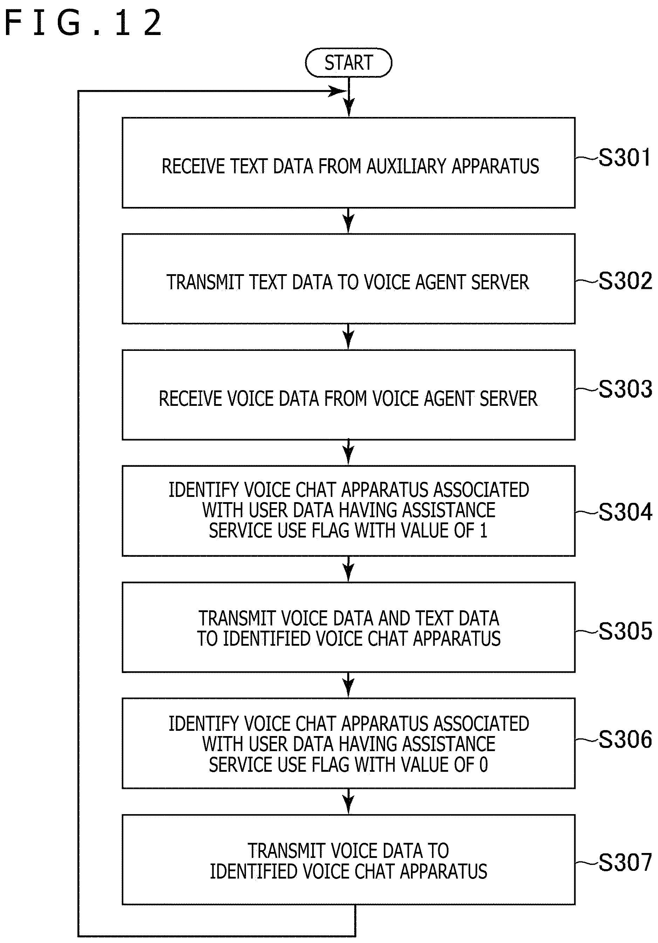

   FIG. 12 is a flow chart illustrating an exemplary flow of processing that is performed in the voice chat apparatus according to the embodiment of the present invention.

### [Description of Embodiment]

FIG. 1 is a diagram illustrating an exemplary overall configuration of a computer network according to an embodiment of the present invention. As illustrated in FIG. 1, voice chat systems 10 (10-1, 10-2, ..., and 10-n), a voice agent server 12, and a management server 14, each of which mainly includes a computer, are connected to a computer network 16 such as the Internet. The voice chat systems 10, the voice agent server 12, and the management server 14 can communicate with each other.

The management server 14 is, for example, a computer such as a server configured to manage account information regarding users who use the voice chat systems 10. The management server 14 stores a plurality of account data associated with the respective users, for example. The account data includes, for example, a user identification (ID) that is identification information regarding the user, real name data indicating the real name of the user, and email address data indicating the email address of the user.

The voice agent server 12 of the present embodiment is a server computer such as a server configured to generate text indicating the result of voice recognition processing on received voice, and to generate voice indicating the result of voice synthesis processing on received text, for example. The voice agent server 12 may implement a voice recognition engine configured to generate text indicating the result of voice recognition processing on received voice, and a voice synthesis engine configured to generate voice indicating the result of voice synthesis processing on received text.

As illustrated in FIG. 2A, the voice chat system 10 includes a voice chat apparatus 20 and a router 22.

The voice chat apparatus 20 is a computer capable of inputting or outputting voice in voice chat, such as a video game console, a portable video game apparatus, a smartphone, or a personal computer.

As illustrated in FIG. 2A, the voice chat apparatus 20 includes, for example, a processor 20a, a storage unit 20b, a communication unit 20c, a display unit 20d, an operation unit 20e, a microphone 20f, a speaker 20g, and an encoding/decoding unit 20h. Note that, the voice chat apparatus 20 may include a camera.

The processor 20a is, for example, a program control device such as a central processing unit (CPU), and executes various types of information processing on the basis of programs stored in the storage unit 20b.

The storage unit 20b is, for example, a storage element such as a read-only memory (ROM) or a random access memory (RAM) or a hard disk drive.

The communication unit 20c is, for example, a communication interface for transmitting/receiving data to/from the computers such as the other voice chat systems 10, the voice agent server 12, or the management server 14 via the router 22 and the computer network 16.

The display unit 20d is, for example, a liquid crystal display, and displays screens generated by the processor 20a or moving images indicated by moving image data received via the communication unit 20c.

The operation unit 20e is, for example, an operation member for operation input to the processor 20a. Note that, the operation unit 20e may be a video game controller.

The microphone 20f is, for example, a voice input device that is used for voice input in voice chat.

The speaker 20g is, for example, a voice output device that is used for voice output in voice chat.

The encoding/decoding unit 20h includes an encoder and a decoder, for example. The encoding/decoding unit 20h encodes input voice to generate voice data indicating the voice. Further, the encoding/decoding unit 20h decodes input voice data to output the voice indicated by the voice data.

Further, by executing predetermined pairing processing, as illustrated in FIG. 2B, an auxiliary apparatus 24 configured to assist voice chat can be added to the voice chat system 10 according to the present embodiment in addition to the voice chat apparatus 20.

The auxiliary apparatus 24 according to the invention as claimed is a portable device, for example, a portable computer such as a smartphone or a tablet device. Note that, the auxiliary apparatus 24 may be a stationary computer.

The auxiliary apparatus 24 according to the present embodiment includes, for example, a processor 24a, a storage unit 24b, a communication unit 24c, and a touch panel 24d.

The processor 24a is, for example, a program control device such as a CPU, and executes various types of information processing on the basis of programs stored in the storage unit 24b.

The storage unit 24b is, for example, a storage element such as a ROM or a RAM or a hard disk drive.

The communication unit 24c is, for example, a communication interface for transmitting/receiving data to/from the computers such as the voice chat apparatus 20 via the router 22. Note that, the communication unit 24c may transmit/receive data to/from the computers such as the other voice chat systems 10, the voice agent server 12, or the management server 14 via the router 22 and the computer network 16, for example.

The touch panel 24d includes, for example, a touch sensor and a display, such as a liquid crystal display, that are integrated with each other. The touch panel 24d displays screens generated by the processor 24a. Further, the user performs various types of operation on the touch panel 24d, for example, tapping the touch panel 24d, thereby being capable of performing operation input to the processor 24a.

The voice chat apparatus 20 and the auxiliary apparatus 24 are connected to the router 22, which is connected to the computer network 16, with cables or wirelessly. The voice chat apparatus 20 and the auxiliary apparatus 24 communicate with the other voice chat systems 10, the voice agent server 12, or the management server 14 via the router 22.

In the present embodiment, the plurality of voice chat systems 10 (10-1 to 10-n) support voice chat. Thus, the present embodiment allows the plurality of users using the respective voice chat systems 10 to enjoy voice chat. Here, for example, the users may have voice chat while sharing a moving image depicting the situation in a video game that some or all of the users participating in the voice chat are playing.

In the present embodiment, a plurality of users participating in voice chat belong to a group called "party." Further, the user of the voice chat system 10 according to the present embodiment performs predetermined operation, thereby being capable of creating a new party or participating in an already created party.

Further, in the present embodiment, the user of the voice chat system 10 in which the auxiliary apparatus 24 and the voice chat apparatus 20 have been paired with each other performs predetermined operation, thereby being capable of using a voice chat assistance service in the voice chat system 10.

In the voice chat system 10 in which the voice chat assistance service is available, the result of voice recognition on voice in voice chat can be displayed on the touch panel 24d of the auxiliary apparatus 24 or text can be input for voice chat instead of voice. Further, the user using the voice chat assistance service performs predetermined operation, thereby being capable of stopping using the voice chat assistance service.

In the present embodiment, information associated with parties is managed with party management data exemplified in FIG. 3. The party management data is stored in the management server 14, for example. As illustrated in FIG. 3, the party management data includes a party ID that is identification information regarding a party and user data associated with users participating in the party. The user data includes user IDs, connection destination address data, type data, assistance service use flags, and the like.

The user ID is, for example, identification information regarding the user. The connection destination address data is, for example, data indicating the address of the voice chat apparatus 20 used by the user. The type data is, for example, data indicating the type of the voice chat apparatus 20 used by the user. The assistance service use flag is, for example, a flag indicating whether or not the voice chat assistance service is available in the voice chat system 10 used by the user. Here, for example, in a case where the voice chat assistance service is available in the voice chat system 10, an assistance service use flag with a value of 1 is set. Further, for example, in a case where the voice chat assistance service is unavailable in the voice chat system 10, an assistance service use flag with a value of 0 is set.

FIG. 3 exemplifies the party management data in which the party in which the five users are participating has the party ID of 001. The party management data illustrated in FIG. 3 includes the five pieces of user data associated with the respective users participating in the party. In the following, the user having the user ID of aaa, the user having the user ID of bbb, the user having the user ID of ccc, the user having the user ID of ddd, and the user having the user ID of eee are referred to as "user A," "user B," "user C," "user D," and "user E," respectively. Further, the user A, the user B, the user C, the user D, and the user E use the respective voice chat systems 10-1, 10-2, 10-3, 10-4, and 10-5. Further, the voice chat systems 10-1, 10-2, 10-3, 10-4, and 10-5 include respective voice chat apparatus 20-1, 20-2, 20-3, 204, and 20-5.

The party management data exemplified in FIG. 3 indicates that the voice chat assistance service is available in none of the voice chat systems 10.

Further, in the present embodiment, a copy of the party management data stored in the management server 14 is transmitted to the voice chat apparatus 20 used by the users participating in the party associated with the party management data. The storage units 20b of the voice chat apparatus 20 store the copy of the party management data stored in the management server 14. Thus, the voice chat apparatus 20 used by the users participating in the party can identify the addresses of the voice chat apparatus 20 used by the users participating in the party.

Further, in the present embodiment, the party management data stored in the management server 14 is updated when the user performs operation to participate in the party, operation to start using the voice chat assistance service, or operation to stop using the voice chat assistance service, for example. Every time the party management data stored in the management server 14 is updated, a copy of the updated party management data is transmitted to the voice chat apparatus 20 used by the users participating in the party associated with the party management data. Then, the copy of the party management data stored in the storage units 20b of the voice chat apparatus 20 is updated. In this way, in the present embodiment, the latest information described in the party management data is shared between the voice chat apparatus 20 used by the users participating in the party associated with the party management data.

The following description assumes that the five users described in the party management data of FIG. 3 have voice chat.

FIG. 4 is a diagram illustrating exemplary processing that is executed when the user A inputs voice for voice chat in a case where the party management data is as illustrated in FIG. 3. In this case, in each of the voice chat systems 10-1 to 10-5, the voice chat apparatus 20 included in the corresponding voice chat system 10 executes a party process 30.

When the user A inputs voice through the microphone 20f of the voice chat apparatus 20-1, voice data indicating the voice is input to the party process 30 of the voice chat apparatus 20-1 (see (1) in FIG. 4). Then, the party process 30 transmits the input voice data to the party process 30 of the voice chat apparatus 20 used by the other users participating in the same party as the user A (see (2) in FIG. 4). Here, for example, voice data associated with the user ID of the user A may be transmitted. In FIG. 4, the voice chat apparatus 20-2 is illustrated as an exemplary transmission destination of the voice data, but similar voice data is transmitted to the voice chat apparatuses 20-3 to 20-5. Then, the party process 30 that has received the voice data outputs the voice indicated by the voice data from the speaker 20g (see (3) in FIG. 4).

In a similar manner, voice input by each of the user B to the user E is output from the voice chat apparatus 20 used by the other users participating in the same party as the user.

FIG. 5 is a diagram illustrating other exemplary party management data. The party management data exemplified in FIG. 5 indicates that the voice chat assistance service is available in the voice chat systems 10-1 and 10-2, but is unavailable in the voice chat systems 10-3 to 10-5.

Note that, the following description assumes that the voice chat system 10-1 includes the voice chat apparatus 20-1 and an auxiliary apparatus 24-1, and that the voice chat system 10-2 includes the voice chat apparatus 20-2 and an auxiliary apparatus 24-2.

In the present embodiment, for example, when the user A performs predetermined operation to enable the voice chat assistance service in the voice chat system 10-1, the party management data stored in the management server 14 is updated. Here, for example, the value of the assistance service use flag of the user data having the user ID of aaa is updated from 0 to 1. Then, in response to this, the party management data stored in the voice chat apparatuses 20-1 to 20-5 is also updated.

Further, in a similar manner, when the user B performs predetermined operation to enable the voice chat assistance service in the voice chat system 10-2, the party management data stored in the management server 14 and the voice chat apparatuses 20-1 to 20-5 is updated. Here, for example, the value of the assistance service use flag of the user data having the user ID of bbb is updated from 0 to 1.

FIG. 6 is a diagram illustrating exemplary processing that is executed when the user A inputs text to be converted into voice for voice chat in a case where the party management data is as illustrated in FIG. 5. Also in this example, in each of the voice chat systems 10-1 to 10-5, the voice chat apparatus 20 included in the corresponding voice chat system 10 executes the party process 30.

Further, the auxiliary apparatus 24 of the voice chat system 10 in which the voice chat assistance service is available executes a companion application process 32. Then, the voice chat apparatus 20 of the voice chat system 10 executes a proxy process 34 for communication with the companion application process 32. Here, for example, the auxiliary apparatuses 241-1 and 24-2 execute the companion application process 32. Then, the voice chat apparatus 20-1 executes the proxy process 34 for communication with the companion application process 32 of the auxiliary apparatus 24-1. Further, the voice chat apparatus 20-2 executes the proxy process 34 for communication with the companion application process 32 of the auxiliary apparatus 24-2.

Further, in the present embodiment, as illustrated in FIG. 5, the voice chat assistance service is available in at least one of the voice chat systems 10 used by the users participating in the party. In this case, all the voice chat apparatus 20 used by the users participating in the party execute the voice agent process 36.

For example, when the value of the assistance service use flag of any of the user data included in the party management data stored in the voice chat apparatus 20 is updated to 1, the voice chat apparatus 20 starts the voice agent process 36.

Here, for example, the voice chat apparatuses 20-1 to 20-5 execute the voice agent process 36. Note that, in the present embodiment, although the voice chat assistance service is unavailable in the voice chat systems 10-3 to 10-5, the voice chat apparatuses 20-3 to 20-5 execute the voice agent process 36.

Here, for example, the user A inputs text to the touch panel 24d of the auxiliary apparatus 24-1 (see (1) in FIG. 6). Then, the companion application process 32 of the auxiliary apparatus 24-1 transmits text data including the text to the proxy process 34 of the voice chat apparatus 20-1 (see (2) in FIG. 6). Then, in the voice chat apparatus 20-1, the proxy process 34 outputs the text data to the voice agent process 36 and the party process 30 (see (3) and (4) in FIG. 6).

Then, the voice agent process 36 of the voice chat apparatus 20-1 transmits the text data to the voice agent server 12 (see (5) in FIG. 6). Then, the voice agent server 12 executes voice synthesis processing on the text data, and transmits voice data obtained as a result of the processing to the voice agent process 36 of the voice chat apparatus 20-1 (see (6) in FIG. 6). Then, the voice agent process 36 outputs the voice data to the party process 30 (see (7) in FIG. 6).

Then, the party process 30 of the voice chat apparatus 20-1 identifies the other voice chat systems 10 in which the voice chat assistance service is available. Here, for example, the voice chat system 10-2 is identified. Then, the party process 30 of the voice chat apparatus 20-1 transmits the voice data and text data described above to the party process 30 of the voice chat apparatus 20 included in the identified voice chat system 10 (see (8) in FIG. 6). Here, for example, voice data and text data associated with the user ID of the user A may be transmitted.

Then, the party process 30 of the voice chat apparatus 20-2 outputs the received text data to the proxy process 34 (see (9) in FIG. 6). Then, the proxy process 34 of the voice chat apparatus 20-2 transmits the text data to the companion application process 32 of the auxiliary apparatus 24-2 (see (10) in FIG. 6). Then, the companion application process 32 of the auxiliary apparatus 24-2 displays the text included in the text data on the touch panel 24d (see (11) in FIG. 6). Further, the party process 30 of the voice chat apparatus 20-2 may output the voice indicated by the received voice data from the speaker 20g (see (12) in FIG. 6).

Further, the party process 30 of the voice chat apparatus 20-1 identifies the other voice chat systems 10 in which the voice chat assistance service is unavailable. Here, for example, the voice chat systems 10-3 to 10-5 are identified. Then, the party process 30 of the voice chat apparatus 20-1 transmits only the voice data described above to the party process 30 of the voice chat apparatus 20 included in the identified voice chat systems 10 (see (13) in FIG. 6). Here, for example, voice data associated with the user ID of the user A may be transmitted. The text data described above is not transmitted to the party process 30 of the voice chat systems 10 in which the voice chat assistance service is unavailable. In FIG. 6, the voice data is transmitted to the party process 30 of the voice chat apparatus 20-3 that is a representative. Then, the party process 30 of the voice chat apparatus 20-3 outputs the voice indicated by the received voice data from the speaker 20g (see (14) in FIG. 6). Note that, in the present embodiment, in a similar manner, the voice indicated by the voice data described above is output from the speakers 20g of the voice chat apparatuses 20-4 and 20-5.

FIG. 7 is a diagram illustrating exemplary processing that is executed when the user C inputs voice for voice chat in a case where the party management data is as illustrated in FIG. 5.

When the user C inputs voice through the microphone 20f of the voice chat apparatus 20-3, voice data indicating the voice is input to the party process 30 and the voice agent process 36 of the voice chat apparatus 20-3 (see (1) in FIG. 7).

Then, the voice agent process 36 of the voice chat apparatus 20-3 transmits the voice data to the voice agent server 12 (see (2) in FIG. 7). Then, the voice agent server 12 executes voice recognition processing on the voice data, and transmits text data obtained as a result of the processing to the voice agent process 36 (see (3) in FIG. 7). Then, the voice agent process 36 outputs the text data to the party process 30 (see (4) in FIG. 7).

Then, the party process 30 of the voice chat apparatus 20-3 identifies the other voice chat systems 10 in which the voice chat assistance service is available. Here, for example, the voice chat systems 10-1 and 10-2 are identified. Then, the party process 30 of the voice chat apparatus 20-3 transmits the voice data and text data described above to the party process 30 of the voice chat apparatus 20 included in the identified voice chat systems 10 (see (5) in FIG. 7). Here, for example, voice data and text data associated with the user ID of the user C may be transmitted. In FIG. 7, the voice data and the text data are transmitted to the party process 30 of the voice chat apparatus 20-1 that is a representative.

Then, the party process 30 of the voice chat apparatus 20-1 outputs the received text data to the proxy process 34 (see (6) in FIG. 7). Then, the proxy process 34 of the voice chat apparatus 20-1 transmits the text data to the companion application process 32 of the auxiliary apparatus 24-1 (see (7) in FIG. 7). Then, the companion application process 32 of the auxiliary apparatus 24-1 displays the text included in the text data on the touch panel 24d (see (8) in FIG. 7). Further, the party process 30 of the voice chat apparatus 20-1 outputs the voice indicated by the received voice data from the speaker 20g (see (9) in FIG. 7). Note that, in the present embodiment, in a similar manner, the auxiliary apparatus 24-2 displays the text included in the text data on the touch panel 24d. Here, the voice indicated by the voice data described above is output from the speaker 20g of the voice chat apparatus 20-2.

Further, the party process 30 of the voice chat apparatus 20-3 identifies the other voice chat systems 10 in which the voice chat assistance service is unavailable. Here, for example, the voice chat systems 10-4 and 10-5 are identified. Then, the party process 30 of the voice chat apparatus 20-3 transmits only the voice data described above to the party process 30 of the voice chat apparatus 20 included in the identified voice chat systems 10 (see (10) in FIG. 7). Here, for example, voice data associated with the user ID of the user C may be transmitted. The text data described above is not transmitted to the party process 30 of the voice chat systems 10 in which the voice chat assistance service is unavailable. In FIG. 7, the voice data is transmitted to the party process 30 of the voice chat apparatus 20-4 that is a representative. Then, the party process 30 of the voice chat apparatus 20-4 outputs the voice indicated by the received voice data from the speaker 20g (see (11) in FIG. 7). Note that, in the present embodiment, in a similar manner, the voice indicated by the voice data described above is output from the speaker 20g of the voice chat apparatus 20-5.

FIG. 8 is a diagram illustrating an exemplary auxiliary screen that is displayed on the touch panel 24d of the auxiliary apparatus 24 according to the present embodiment. FIG. 8 illustrates the auxiliary screen that is displayed on the touch panel 24d of the auxiliary apparatus 24-1 in which the voice chat assistance service is available, which is used by the user A.

On the auxiliary screen illustrated in FIG. 8, text obtained as a result of voice recognition on voice input by the users other than the user A is displayed. For example, on the auxiliary screen illustrated in FIG. 8, text S1 obtained as a result of voice recognition on voice input by the user B is displayed in association with a character string S2 representing the user ID of the user B. The user ID of the user B can be identified on the basis of voice data and text data transmitted from the voice chat apparatus 20-2 in association with the user ID of the user B, for example.

Further, on the auxiliary screen illustrated in FIG. 8, text S3 obtained as a result of voice recognition on voice input by the user C is displayed in association with a character string S4 representing the user ID of the user C. The user ID of the user C can be identified on the basis of voice data and text data transmitted from the voice chat apparatus 20-3 in association with the user ID of the user C, for example.

Further, on the auxiliary screen, a form F for text input and a send button SB for posting text input in the form F are displayed. For example, the user A inputs text in the form F and taps the send button SB to transmit text data including the text to the voice chat apparatus 20-1. Further, on the auxiliary screen, text S5 input by the user A in this way is displayed in association with a character string S6 representing the user ID of the user A.

In a case where, in the present embodiment, the voice chat assistance service is available in none of the voice chat systems 10 used by the users participating in the party, the voice agent process 36 ends in all the voice chat apparatus 20 used by the users participating in the party.

For example, when the values of the assistance service use flags of all the user data included in the party management data stored in the voice chat apparatus 20 are set to 0, the voice chat apparatus 20 ends the voice agent process 36.

As described above, in the present embodiment, text obtained as a result of voice recognition on voice in voice chat is not provided to the voice chat systems 10 in which the voice chat assistance service is unavailable. Thus, according to the present embodiment, as compared to a case where text obtained as a result of voice recognition on voice in voice chat is provided to all the voice chat systems 10, the data traffic for voice chat is reduced. In this way, according to the present embodiment, whether or not to provide text obtained as a result of voice recognition on voice in voice chat can be appropriately controlled.

Now, functions that are implemented in the voice chat system 10 according to the present embodiment are described in more detail.

FIG. 9 is a functional block diagram illustrating exemplary functions that are implemented in the voice chat system 10 according to the present embodiment. Note that, in the voice chat system 10 according to the present embodiment, all the functions illustrated in FIG. 9 are not necessarily implemented, and functions other than the functions illustrated in FIG. 9 may be implemented.

As illustrated in FIG. 9, the voice chat apparatus 20 according to the present embodiment functionally includes, for example, a party management data storing unit 40, a party managing unit 42, a voice receiving unit 44, a text acquiring unit 46, a text receiving unit 48, a voice acquiring unit 50, a transmission control unit 52, a data receiving unit 54, a voice output unit 56, and an auxiliary transmission unit 58.

The party management data storing unit 40 is implemented mainly with the storage unit 20b. The party managing unit 42 and the transmission control unit 52 are implemented mainly with the processor 20a and the communication unit 20c. The voice receiving unit 44 is implemented mainly with the microphone 20f and the encoding/decoding unit 20h. The text acquiring unit 46, the text receiving unit 48, the voice acquiring unit 50, the data receiving unit 54, and the auxiliary transmission unit 58 are implemented mainly with the communication unit 20c. The voice output unit 56 is implemented mainly with the speaker 20g and the encoding/decoding unit 20h.

The above-mentioned functions are implemented by the processor 20a executing a program including instructions corresponding to the above-mentioned functions, which has been installed on the voice chat apparatus 20 that is the computer. The program is supplied to the voice chat apparatus 20 through a computer readable information storage medium such as an optical disc, a magnetic disk, a magnetic tape, a magneto-optical disk, or a flash memory, or via the Internet, for example.

Further, as illustrated in FIG. 9, the auxiliary apparatus 24 according to the present embodiment functionally includes, for example, a text receiving unit 60, a text transmitting unit 62, an auxiliary reception unit 64, and a display control unit 66. The text receiving unit 60 and the display control unit 66 are implemented mainly with the processor 24a and the touch panel 24d. The text transmitting unit 62 and the auxiliary reception unit 64 are implemented mainly with the communication unit 24c.

The above-mentioned functions are implemented by the processor 24a executing a program including instructions corresponding to the above-mentioned functions, which has been installed on the auxiliary apparatus 24 that is the computer. The program is supplied to the auxiliary apparatus 24 through a computer readable information storage medium such as an optical disc, a magnetic disk, a magnetic tape, a magneto-optical disk, or a flash memory, or via the Internet, for example.

The party management data storing unit 40 of the present embodiment stores, for example, the party management data exemplified in FIG. 3 and FIG. 5.

The party managing unit 42 of the present embodiment updates, for example, when receiving party management data transmitted from the management server 14, the party management data stored in the party management data storing unit 40 to the received party management data.

In the present embodiment, the value of the assistance service use flag in the party management data stored in the management server 14 is updated when the user performs operation to start using the voice chat assistance service or operation to stop using the voice chat assistance service, for example. Then, the management server 14 transmits, on the basis of the update, the updated party management data to the voice chat system 10 used by the user participating in the party managed by the party management data. Then, as described above, the party managing unit 42 updates, when receiving the party management data transmitted from the management server 14, the party management data stored in the party management data storing unit 40 to the received party management data.

Further, the party managing unit 42 may detect, on the basis of the updated party management data, that the display of voice recognition results is enabled in any of the voice chat systems 10. The detection includes, for example, detecting that at least one of the values of the assistance service use flags that have been all 0 is changed to 1.

Further, the party managing unit 42 may detect, on the basis of the updated party management data, that the display of voice recognition results is disabled in all the voice chat systems 10. The detection includes, for example, detecting that at least one of the values of the assistance service use flags that has been 1 is changed so that the values of all the assistance service use flags are 0.

The voice receiving unit 44 of the present embodiment receives, for example, voice in voice chat. The voice receiving unit 44 may encode the voice to generate voice data indicating the voice.

The text acquiring unit 46 of the present embodiment acquires, for example, text obtained as a result of voice recognition on voice received by the voice receiving unit 44. Here, for example, the text acquiring unit 46 may transmit voice data indicating the voice to the voice agent server 12 capable of communicating with the voice chat apparatus 20. Then, the text acquiring unit 46 may receive, from the voice agent server 12, text data including text obtained as a result of voice recognition on the voice indicated by the voice data. This function corresponds to the function of the voice agent process 36 illustrated in FIG. 6 and FIG. 7.

Further, the text acquiring unit 46 may start acquiring text when the display of voice recognition results is enabled in any of the at least one voice chat system 10. Further, the text acquiring unit 46 may start acquiring text when the auxiliary apparatus 24 is included in any of the at least one voice chat system 10. For example, the text acquiring unit 46 may start the voice agent process 36 when the party managing unit 42 detects that the display of text is enabled in any of the voice chat systems 10.

Further, the text acquiring unit 46 may stop acquiring text when the display of voice recognition results is disenabled in all of the at least one voice chat system 10. Further, the text acquiring unit 46 may stop acquiring text when the auxiliary apparatus 24 is included in none of the at least one voice chat system 10. For example, the text acquiring unit 46 may end the voice agent process 36 when the party managing unit 42 detects that the display of text is disenabled in all the voice chat systems 10.

The text receiving unit 48 of the voice chat apparatus 20 of the present embodiment receives, for example, text to be subjected to voice synthesis processing. Here, the text receiving unit 48 may receive, for example, text input to the auxiliary apparatus 24 connected to the voice chat apparatus 20. This function corresponds to the function of the proxy process 34 illustrated in FIG. 6 and FIG. 7.

The voice acquiring unit 50 of the present embodiment acquires, for example, voice obtained as a result of voice synthesis on text received by the text receiving unit 48. Here, for example, the voice acquiring unit 50 may transmit text data indicating the text to the voice agent server 12 capable of communicating with the voice chat apparatus 20. Then, the voice acquiring unit 50 may receive, from the voice agent server 12, voice obtained as a result of voice synthesis on the text included in the text data. This function corresponds to the function of the voice agent process 36 illustrated in FIG. 6 and FIG. 7.

The transmission control unit 52 of the present embodiment controls, for example, on the basis of whether or not the display of voice recognition results is enabled in the voice chat system 10 that is a communication destination, whether or not to transmit text data to the communication destination. Here, the transmission control unit 52 may control, on the basis of whether or not the display of voice recognition results is enabled in the voice chat system 10 that is a communication destination, whether or not to transmit, to the communication destination, voice data or the voice data and text data. For example, the transmission control unit 52 may control whether not to transmit voice data indicating voice received by the voice receiving unit 44 or to transmit, together with the voice data, text data acquired by the text acquiring unit 46. Further, for example, the transmission control unit 52 may control whether or not to transmit voice data indicating voice acquired by the voice acquiring unit 50 or to transmit, together with the voice data, text data including text received by the text receiving unit 48. This function corresponds to the function of the party process 30 illustrated in FIG. 5 to FIG. 7.

Here, the transmission control unit 52 may control, for example, on the basis of whether or not the voice chat system 10 that is a communication destination includes the auxiliary apparatus 24 configured to display voice recognition results, whether or not to transmit text data to the communication destination. Further, the transmission control unit 52 may control, for example, on the basis of whether or not the voice chat system 10 that is a communication destination includes the auxiliary apparatus 24 configured to display voice recognition results, whether or not to transmit voice data or the voice data and text data.

Further, for example, on the basis of the values of the assistance service use flags in the party management data stored in the party management data storing unit 40, whether or not to transmit text data to a communication destination may be controlled. For example, voice data and text data may be transmitted to the voice chat system 10 having an assistance service use flag with a value of 1. Meanwhile, only voice data may be transmitted to the voice chat system 10 having an assistance service use flag with a value of 0.

The data receiving unit 54 of the present embodiment receives, for example, voice data transmitted from the voice chat apparatus 20 that is a communication destination. Further, the data receiving unit 54 of the present embodiment receives, for example, text data transmitted from the voice chat apparatus 20 that is a communication destination. This function corresponds to the function of the party process 30 illustrated in FIG. 5 to FIG. 7.

The voice output unit 56 of the present embodiment outputs, for example, voice in voice chat. For example, the voice output unit 56 outputs the voice indicated by voice data received by the data receiving unit 54. The voice output unit 56 may decode voice data received by the data receiving unit 54 to output the voice indicated by the voice data.

The auxiliary transmission unit 58 of the present embodiment transmits, for example, text data received by the data receiving unit 54 to the auxiliary apparatus 24. This function corresponds to the function of the proxy process 34 illustrated in FIG. 6 and FIG. 7.

The text receiving unit 60 of the auxiliary apparatus 24 of the present embodiment receives, for example, text input to the touch panel 24d.

The text transmitting unit 62 of the present embodiment transmits, for example, text data including text received by the text receiving unit 60 to the voice chat apparatus 20.

The auxiliary reception unit 64 of the present embodiment receives, for example, text data transmitted from the voice chat apparatus 20.

The display control unit 66 of the present embodiment displays, for example, the text included in text data received by the auxiliary reception unit 64 or text received by the text receiving unit 60 on the touch panel 24d, for example. The display control unit 66 may display the auxiliary screen illustrated in FIG. 8 on the touch panel 24d.

The functions of the text receiving unit 60, the text transmitting unit 62, the auxiliary reception unit 64, and the display control unit 66 of the auxiliary apparatus 24 correspond to the function of the companion application process 32 illustrated in FIG. 6 and FIG. 7.

Here, an exemplary flow of processing that is performed in the voice chat apparatus 20 in which the voice agent process 36 has stopped according to the present embodiment is described with reference to the flow chart of FIG. 10. The processing in S101 to S102 illustrated in FIG. 10 is repeatedly executed at a predetermined sampling rate.

First, the voice receiving unit 44 encodes voice received in the period of this loop to generate voice data (S101).

Then, the transmission control unit 52 transmits the voice data generated in the processing in S101 to the voice chat apparatus 20 used by a user participating in the same party (S102), and the processing returns to the processing in S101. Note that, the voice data is not transmitted to the voice chat apparatus 20 that executes the processing in S102.

The voice chat apparatus 20 that has received the voice data transmitted in the processing in S102 outputs the voice indicated by the voice data.

Next, an exemplary flow of processing based on input voice that is performed in the voice chat apparatus 20 in which the voice agent process 36 has been operating according to the present embodiment is described with reference to the flow chart of FIG. 11. The processing in S201 to S207 illustrated in FIG. 11 is repeatedly executed at a predetermined sampling rate.

First, the voice receiving unit 44 encodes voice received in the period of this loop to generate voice data (S201).

Then, the text acquiring unit 46 transmits the voice data generated in the processing in S201 to the voice agent server 12 (S202).

Then, the text acquiring unit 46 receives the text data transmitted from the voice agent server 12 (S203).

Then, the transmission control unit 52 identifies, on the basis of the party management data stored in the party management data storing unit 40, the voice chat apparatus 20 associated with user data having an assistance service use flag with a value of 1 (S204).

Then, the transmission control unit 52 transmits, to the voice chat apparatus 20 identified in the processing in S204, the voice data generated in the processing in S201 and the text data received in the processing in S203 (S205). Note that, the voice data and the text data are not transmitted to the voice chat apparatus 20 that executes the processing in S205.

Then, the transmission control unit 52 identifies, on the basis of the party management data stored in the party management data storing unit 40, the voice chat apparatus 20 associated with user data having an assistance service use flag with a value of 0 (S206).

Then, the transmission control unit 52 transmits the voice data generated in the processing in S201 to the voice chat apparatus 20 identified in the processing in S206 (S207), and the processing returns to the processing in S201. Note that, the voice data is not transmitted to the voice chat apparatus 20 that executes the processing in S207.

The voice chat apparatus 20 that has received the voice data transmitted in the processing in S205 or S207 outputs the voice indicated by the voice data.

The voice chat apparatus 20 that has received the text data transmitted in the processing in S205 transmits the text data to the auxiliary apparatus 24 connected to the voice chat apparatus 20. Then, the auxiliary apparatus 24 that has received the text data displays the text included in the text data on the touch panel 24d of the auxiliary apparatus 24.

Note that, in the processing in S205, only the text data received in the processing in S203 may be transmitted. In this case, the voice chat apparatus 20 that has received the text data may not output the voice indicated by the voice data generated in the processing in S201.

Next, an exemplary flow of processing based on input text that is performed in the voice chat apparatus 20 in which the voice agent process 36 has been operating according to the present embodiment is described with reference to the flow chart of FIG. 12. The processing in S301 to S307 illustrated in FIG. 12 is repeatedly executed at a predetermined sampling rate.

First, the text receiving unit 48 receives text data transmitted from the auxiliary apparatus 24 in the period of this loop (S301).

Then, the voice acquiring unit 50 transmits the text data generated in the processing in S301 to the voice agent server 12 (S302).

Then, the voice acquiring unit 50 receives the voice data transmitted from the voice agent server 12 (S303).

Then, the transmission control unit 52 identifies, on the basis of the party management data stored in the party management data storing unit 40, the voice chat apparatus 20 associated with user data having an assistance service use flag with a value of 1 (S304).

Then, the transmission control unit 52 transmits, to the voice chat apparatus 20 identified in the processing in S304, the voice data received in the processing in S303 and the text data received in the processing in S301 (S305). Note that, the voice data and the text data are not transmitted to the voice chat apparatus 20 that executes the processing in S305.

Then, the transmission control unit 52 identifies, on the basis of the party management data stored in the party management data storing unit 40, the voice chat apparatus 20 associated with user data having an assistance service use flag with a value of 0 (S306).

Then, the transmission control unit 52 transmits the voice data received in the processing in S303 to the voice chat apparatus 20 identified in the processing in S306 (S307), and the processing returns to the processing in S301. Note that, the voice data is not transmitted to the voice chat apparatus 20 that executes the processing in S307.

The voice chat apparatus 20 that has received the voice data transmitted in the processing in S305 or S307 outputs the voice indicated by the voice data.

The voice chat apparatus 20 that has received the text data transmitted in the processing in S305 transmits the text data to the auxiliary apparatus 24 connected to the voice chat apparatus 20. Then, the auxiliary apparatus 24 that has received the text data displays the text included in the text data on the touch panel 24d of the auxiliary apparatus 24.

Note that, in the processing in S305, only the text data received in the processing in S301 may be transmitted. In this case, the voice chat apparatus 20 that has received the text data may not output the voice indicated by the voice data generated in the processing in S303.

Note that, the present invention is not limited to the embodiment described above.

For example, the division of roles of the voice chat apparatus 20 and the auxiliary apparatus 24 is not limited to the above-mentioned one. For example, the auxiliary apparatus 24 may implement some or all of the functions of the voice chat apparatus 20 illustrated in FIG. 9. Further, for example, the voice chat apparatus 20 may implement some or all of the functions of the auxiliary apparatus 24 illustrated in FIG. 9.

Further, the above concrete character strings and numerical values and the concrete character strings and numerical values in the drawings are illustrative, and the present invention is not limited to these character strings and numerical values.

## Claims

1. A communication system, the communication system comprising:
a first voice chat system (10-3) comprising:
a voice receiving unit (36) configured to receive voice in voice chat;
a text acquiring unit (36) configured to acquire text obtained as a result of voice recognition on the voice;
a transmission control unit (30) configured to control, on a basis of whether or not display of a voice recognition result is performed by an auxiliary apparatus in the voice chat system that is a communication destination, whether or not to transmit text data including the text to the communication destination; and
a transmission unit (30) configured to transmit the voice data and, in response to control by the transmission control unit, text data; and
a second voice chat system (10-1) comprising:
a voice chat apparatus (20-1) comprising a communication unit (30) configured to receive the voice and text data from the first voice chat system and configured to output the received voice via a speaker (20g), and comprising a second communication unit (34) to transmit the text data to the auxiliary apparatus; and
the auxiliary apparatus (24-1) configured to output the received text data for display, wherein the auxiliary apparatus is a portable device executing a companion application process (32).

2. The communication system according to claim 1, wherein the text acquiring unit starts acquiring the text when the display of the voice recognition result is performed in any of the plurality of voice chat systems.

3. The communication system according to claim 2, wherein the text acquiring unit stops acquiring the text when the display of the voice recognition result is performed in none of the plurality of voice chat systems.

4. The communication system according to claim 1, wherein the transmission control unit controls, on a basis of whether or not an auxiliary apparatus configured to display a voice recognition result is included in the voice chat system that is the communication destination, whether or not to transmit the text data to the communication destination.

5. The communication system according to claim 4, wherein the text acquiring unit starts acquiring the text when the auxiliary apparatus is included in any of the plurality of voice chat systems.

6. The communication system according to claim 5, wherein the text acquiring unit stops acquiring the text when the auxiliary apparatus is included in none of the plurality of voice chat systems.

7. The communication system according to any one of claims 1 to 6,
wherein the text acquiring unit transmits voice data indicating the voice to a server capable of communicating with the voice chat system, and
wherein the text acquiring unit receives, from the server, text obtained as a result of voice recognition on the voice indicated by the voice data.

8. A voice chat method comprising the steps of:
receiving (S201), at a first voice chat system, voice in voice chat;
acquiring (S203), at the first voice chat system, text obtained as a result of voice recognition on the voice;
controlling (S204), on a basis of whether or not display of a voice recognition result is performed by an auxiliary apparatus in a second voice chat system that is a communication destination, whether or not to transmit text data including the text to the communication destination;
transmitting, from the first voice chat system, the voice data and, in response to control by the transmission control unit, text data;
receiving the voice and text data at a voice chat apparatus associated with the second voice chat system;
outputting, by the voice chat apparatus, the received voice at a voice chat apparatus associated with the second voice chat system;
transmitting, by the voice chat apparatus, the text data to the auxiliary apparatus; and
outputting, for display, the received text data at an auxiliary apparatus associated with the second voice chat system, wherein the auxiliary apparatus is a portable device executing a companion application process.

9. A program causing a communication system to execute the steps of claim 8.

## Patentansprüche

1. Kommunikationssystem, wobei das Kommunikationssystem umfasst:
ein erstes Sprachchatsystem (10-3), umfassend:
eine Sprachempfangseinheit (36), die so konfiguriert ist, dass sie Sprache in einem Sprachchat empfängt;
eine Texterfassungseinheit (36), die so konfiguriert ist, dass sie Text erfasst, der als Ergebnis der Spracherkennung der Sprache erhalten wurde;
eine Übertragungssteuereinheit (30), die so konfiguriert ist, dass sie auf der Grundlage, ob eine Anzeige eines Spracherkennungsergebnisses durch eine Zusatzeinrichtung im Sprachchatsystem, das ein Kommunikationsziel ist, durchgeführt wird oder nicht, steuert, ob Textdaten, die den Text enthalten, an das Kommunikationsziel übertragen werden oder nicht; und
eine Übertragungseinheit (30), die so konfiguriert ist, dass sie die Sprachdaten und, als Reaktion auf die Steuerung durch die Übertragungssteuereinheit, Textdaten überträgt; und
ein zweites Sprachchatsystem (10-1), umfassend:
eine Sprachchateinrichtung (20-1), die eine Kommunikationseinheit (30) umfasst, die so konfiguriert ist, dass sie die Sprach- und Textdaten von dem ersten Sprachchatsystem empfängt und die empfangene Sprache über einen Lautsprecher (20g) ausgibt, und das eine zweite Kommunikationseinheit (34) umfasst, um die Textdaten an die Zusatzeinrichtung zu übertragen; und
die Zusatzeinrichtung (24-1) so konfiguriert ist, dass sie die empfangenen Textdaten zur Anzeige ausgibt, wobei die Zusatzeinrichtung eine tragbare Vorrichtung ist, das einen Begleitanwendungsprozess (32) ausführt.

2. Kommunikationssystem nach Anspruch 1, wobei die Texterfassungseinheit mit dem Erfassen des Textes beginnt, wenn die Anzeige des Spracherkennungsergebnisses in einem der Vielzahl von Sprachchatsystemen erfolgt.

3. Kommunikationssystem nach Anspruch 2, wobei die Texterfassungseinheit das Erfassen des Textes stoppt, wenn die Anzeige des Spracherkennungsergebnisses in keinem der Vielzahl von Sprachchatsystemen erfolgt.

4. Kommunikationssystem nach Anspruch 1, wobei die Übertragungssteuereinheit auf einer Grundlage davon, ob eine Hilfseinrichtung, die zum Anzeigen eines Spracherkennungsergebnisses konfiguriert ist, in dem Sprachchatsystem, das das Kommunikationsziel ist, enthalten ist oder nicht, steuert, ob die Textdaten an das Kommunikationsziel übertragen werden sollen oder nicht.

5. Kommunikationssystem nach Anspruch 4, wobei die Texterfassungseinheit mit dem Erfassen des Textes beginnt, wenn die Zusatzeinrichtung in einem der Vielzahl von Sprachchatsystemen enthalten ist.

6. Kommunikationssystem nach Anspruch 5, wobei die Texterfassungseinheit das Erfassen des Textes stoppt, wenn die Zusatzeinrichtung in keinem der Vielzahl von Sprachchatsystemen enthalten ist.

7. Kommunikationssystem nach einem der Ansprüche 1 bis 6, wobei die Texterfassungseinheit Sprachdaten, die die Stimme angeben, an einen Server überträgt, der in der Lage ist, mit dem Sprachchatsystem zu kommunizieren, und
wobei die Texterfassungseinheit von dem Server einen Text empfängt, der als Ergebnis der Spracherkennung an der durch die Sprachdaten angegebenen Stimme erhalten wurde.

8. Sprachchatverfahren, umfassend die Schritte:
Empfangen (S201) von Sprache im Sprachchat in einem ersten Sprachchatsystem;
Erfassen (S203) von Text, der als Ergebnis der Spracherkennung anhand der Stimme erhalten wurde, im ersten Sprachchatsystem;
Steuern (S204), auf der Grundlage, ob die Anzeige eines Spracherkennungsergebnisses durch eine Zusatzeinrichtung in einem zweiten Sprachchatsystem, das ein Kommunikationsziel ist, durchgeführt wird oder nicht, ob Textdaten, die den Text enthalten, an das Kommunikationsziel übertragen werden sollen oder nicht;
Übertragen der Sprachdaten und, als Reaktion auf die Steuerung durch die Übertragungssteuereinheit, von Textdaten von dem ersten Sprachchatsystem;
Empfangen der Sprach- und Textdaten an einer mit dem zweiten Sprachchatsystem verbundenen Sprachchateinrichtung;
Ausgeben der empfangenen Stimme durch die Sprachchateinrichtung an eine Sprachchateinrichtung, die mit dem zweiten Sprachchatsystem verbunden ist;
Übertragen der Textdaten durch die Sprachchateinrichtung an die Zusatzeinrichtung; und
Ausgeben, zur Anzeige, der empfangenen Textdaten an eine Zusatzeinrichtung, die mit dem zweiten Sprachchatsystem verbunden ist, wobei die Zusatzeinrichtung eine tragbare Vorrichtung ist, die einen Begleitanwendungsprozess ausführt.

9. Programm, das ein Kommunikationssystem veranlasst, die Schritte nach Anspruch 8 auszuführen.

## Revendications

1. Système de communication, le système de communication comprenant :
un premier système de chat vocal (10-3) comprenant :
une unité de réception vocale (36) configurée pour recevoir une voix dans un chat vocal ;
une unité d'acquisition de texte (36) configurée pour acquérir un texte obtenu suite à une reconnaissance vocale sur la voix ;
une unité de commande de transmission (30) configurée pour commander, en fonction de l'affichage ou non d'un résultat de reconnaissance vocale par un appareil auxiliaire du système de chat vocal qui est une destination de communication, de la transmission ou non de données textuelles y compris le texte à destination de communication ; et
une unité de transmission (30) configurée pour transmettre les données vocales et, en réponse à la commande par l'unité de commande de transmission, des données textuelles ; et
un second système de chat vocal (10-1) comprenant :
un appareil de chat vocal (20-1) comprenant une unité de communication (30) configurée pour recevoir la voix et des données textuelles provenant du premier système de chat vocal et configurée pour émettre la voix reçue par l'intermédiaire d'un haut-parleur (20g), et comprenant une seconde unité de communication (34) pour transmettre les données textuelles à l'appareil auxiliaire ; et
l'appareil auxiliaire (24-1) configuré pour afficher les données textuelles reçues, dans lequel l'appareil auxiliaire est un dispositif portable exécutant un procédé d'application compagnon (32).

2. Système de communication selon la revendication 1, dans lequel l'unité d'acquisition de texte commence à acquérir le texte lorsque l'affichage du résultat de la reconnaissance vocale est effectué dans l'un quelconque parmi la pluralité de systèmes de chat vocal.

3. Système de communication selon la revendication 2, dans lequel l'unité d'acquisition de texte cesse d'acquérir le texte lorsque l'affichage du résultat de la reconnaissance vocale est effectué dans aucun de la pluralité de systèmes de chat vocal.

4. Système de communication selon la revendication 1, dans lequel l'unité de commande de transmission commande, en fonction de l'inclusion ou non d'un appareil auxiliaire configuré pour afficher un résultat de reconnaissance vocale dans le système de chat vocal qui est la destination de communication, la transmission ou non des données textuelles à la destination de communication.

5. Système de communication selon la revendication 4, dans lequel l'unité d'acquisition de texte commence à acquérir le texte lorsque l'appareil auxiliaire est inclus dans l'un quelconque parmi la pluralité de systèmes de chat vocal.

6. Système de communication selon la revendication 5, dans lequel l'unité d'acquisition de texte cesse d'acquérir le texte lorsque l'appareil auxiliaire n'est inclus dans aucun de la pluralité de systèmes de chat vocal.

7. Système de communication selon l'une quelconque des revendications 1 à 6, dans lequel l'unité d'acquisition de texte transmet des données vocales indiquant la voix à un serveur apte à communiquer avec le système de chat vocal, et
dans lequel l'unité d'acquisition de texte reçoit du serveur un texte obtenu suite à la reconnaissance vocale de la voix indiquée par les données vocales.

8. Procédé de chat vocal comprenant les étapes consistant à :
recevoir (S201), au niveau d'un premier système de chat vocal, une voix dans un chat vocal ;
acquérir (S203), au niveau du premier système de chat vocal, un texte obtenu suite à la reconnaissance vocale sur la voix ;
commander (S204), en fonction de l'affichage ou non d'un résultat de reconnaissance vocale par un appareil auxiliaire dans un second système de chat vocal qui est une destination de communication, de la transmission ou non de données textuelles y compris le texte à la destination de communication ;
transmettre, à partir du premier système de chat vocal, les données vocales et, en réponse à la commande par l'unité de commande de transmission, des données textuelles ;
recevoir la voix et des données textuelles au niveau d'un appareil de chat vocal associé au second système de chat vocal ;
émettre, par l'appareil de chat vocal, la voix reçue au niveau d'un appareil de chat vocal associé au second système de chat vocal ;
transmettre, par l'appareil de chat vocal, les données textuelles à l'appareil auxiliaire ; et
afficher les données textuelles reçues au niveau d'un appareil auxiliaire associé au second système de chat vocal, dans lequel l'appareil auxiliaire est un dispositif portable exécutant un procédé d'application compagnon.

9. Programme amenant un système de communication à exécuter les étapes consistant à la revendication 8.
